(19) **Europäisches Patentamt / European Patent Office / Office européen des brevets**

(11) **EP 2 584 376 A1**

(12) **EUROPEAN PATENT APPLICATION**

(43) Date of publication:
24.04.2013 Bulletin 2013/17

(51) Int Cl.:
*G01S 19/32* $^{(2010.01)}$    *G01S 19/21* $^{(2010.01)}$

(21) Application number: **13000290.0**

(22) Date of filing: **10.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.11.2008 US 268861**

(62) Document number(s) of the earlier application(s) in accordance with Art. 76 EPC:
**09756606.1 / 2 356 479**

(71) Applicant: **Qualcomm Incorporated**
**San Diego, CA 92121-1714 (US)**

(72) Inventors:
 • **Ahmed, Rizwan**
  **San Diego, CA 92121 (US)**
 • **Rowitch, Douglas Neal**
  **San Diego, CA 92121 (US)**

(74) Representative: **Carstens, Dirk Wilhelm**
**Wagner & Geyer**
**Gewürzmühlstrasse 5**
**80538 München (DE)**

Remarks:
This application was filed on 21-11-2013 as a divisional application to the application mentioned under INID code 62.

(54) **Method for performing consistency checks for multiple signals received from a transmitter**

(57) The subject matter disclosed herein relates to a system and method for processing multiple navigation signal components received from multiple global navigation satellite systems (GNSS'). In a particular implementation, an energy detection in a first navigation signal component is classified based, at least in part, on information in a second navigation signal component.

700

```
RECEIVE FIRST AND SECOND
NAVIGATION SIGNAL COMPONENTS
FROM TRANSMITTER
```

705

```
CLASSIFY ENERGY DETECTION IN FIRST
NAVIGATION SIGNAL COMPONENT
BASED AT LEAST IN PART ON SECOND
NAVIGATION SIGNAL COMPONENT
```

FIG. 7

**Description**

**BACKGROUND**

Field:

The subject matter disclosed herein relates to relates to processing of performing consistency checks for multiple signals received from a transmitter.

Information:

A satellite positioning system (SPS) typically comprises a system of transmitters positioned to enable entities to determine their location on the Earth based, at least in part, on signals received from the transmitters. Such a transmitter typically transmits a signal marked with a repeating pseudo-random noise (PN) code of a set number of chips and may be located on ground based control stations, user equipment and/or space vehicles. In a particular example, such transmitters may be located on Earth orbiting satellites. For example, a satellite in a constellation of a Global Navigation Satellite System (GNSS) such as Global Positioning System (GPS), Galileo, Glonass or Compass may transmit a signal marked with a PN code that is distinguishable from PN codes transmitted by other satellites in the constellation.

To estimate a location at a receiver, a navigation system may determine pseudorange measurements to satellites "in view" of the receiver using well-known techniques based, at least in part, on detections of PN codes in signals received from the satellites. Such a pseudorange to a satellite may be determined based, at least in part, on a code phase detected in a received signal marked with a PN code associated with the satellite during a process of acquiring the received signal at a receiver. To acquire the received signal, a navigation system typically correlates the received signal with a locally generated PN code associated with a satellite. For example, such a navigation system typically correlates such a received signal with multiple code and/or time shifted versions of such a locally generated PN code. Detection of a particular time and/or code shifted version yielding a correlation result with the highest signal power may indicate a code phase associated with the acquired signal for use in measuring pseudorange as discussed above.

Upon detection of a code phase of a signal received from a GNSS satellite, a receiver may form multiple pseudorange hypotheses. Using additional information, a receiver may eliminate such pseudorange hypotheses to, in effect, reduce an ambiguity associated with a true pseudorange measurement. With sufficient accuracy in knowledge of timing of a signal received from a GNSS satellite, some or all false pseudorange hypotheses may be eliminated.

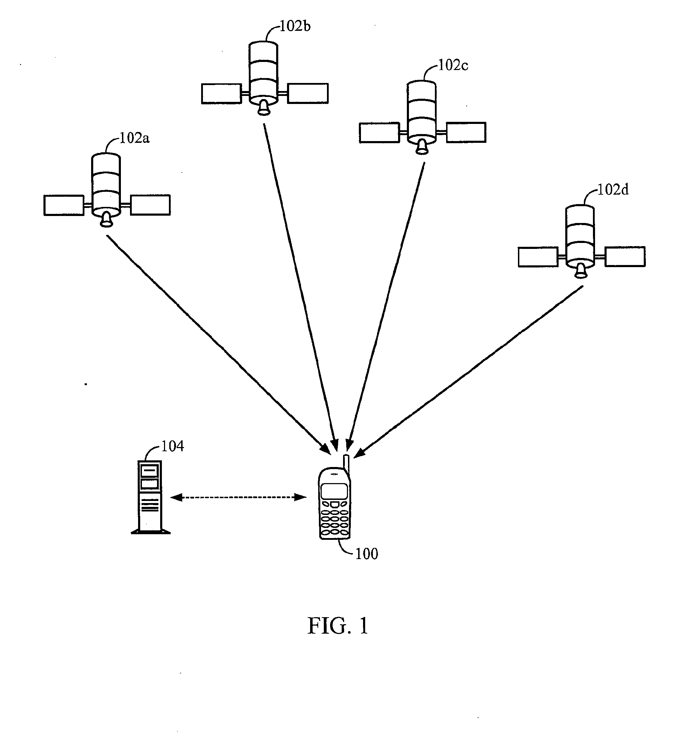

FIG. 1 illustrates an application of an SPS system, whereby a mobile station (MS) 100 in a wireless communications system receives transmissions from satellites 102a, 102b, 102c, 102d in the line of sight to MS 100, and derives time measurements from four or more of the transmissions. MS 100 may provide such measurements to position determination entity (PDE) 104, which determines the position of the station from the measurements. Alternatively, the subscriber station 100 may determine its own position from this information.

MS 100 may search for a transmission from a particular satellite by correlating the PN code for the satellite with a received signal. The received signal typically comprises a composite of transmissions from one or more satellites within a line of sight to a receiver at MS 100 in the presence of noise. A correlation may be performed over a range of code phase hypotheses known as the code phase search window $W_{CP}$, and over a range of Doppler frequency hypotheses known as the Doppler search window $W_{DOPP}$. As pointed out above, such code phase hypotheses are typically represented as a range of PN code shifts. Also, Doppler frequency hypotheses are typically represented as Doppler frequency bins.

**BRIEF DESCRIPTION OF THE FIGURES**

Non-limiting and non-exhaustive features will be described with reference to the following figures, wherein like reference numerals refer to like parts throughout the various figures.

FIG. 1 is a schematic diagram of a satellite positioning system (SPS) according to one aspect.

FIG. 2 illustrates a navigation system according to one implementation.

FIG. 3 is a diagram showing a two-dimensional search window according to one particular implementation.

FIG. 4 is an energy plot showing a peak as may be obtained from a line-of-sight signal in one particular example.

FIG. 5 is an energy plot showing several peaks due to multipath instances of the same transmitted signal in one particular example.

FIG. 6 illustrates of various frequencies used for transmission of civilian navigation signals.

FIG. 7 illustrates a method of classifying an energy detection in a first navigation signal component according to one implementation.

FIG. 8 is a schematic diagram of a mobile station according to one aspect.

**SUMMARY**

In one particular implementation, a method is provided in which a navigation signal is received from a transmitter. The navigation signal comprises a first navigation signal component and a second navigation signal component. An energy detection in the first navigation signal component is classified based at least in part on the second navigation signal component.

**DETAILED DESCRIPTION**

Reference throughout this specification to "one example", "one feature", "an example" or "one feature" means that a particular feature, structure, or characteristic described in connection with the feature and/or example is included in at least one feature and/or example of claimed subject matter. Thus, the appearances of the phrase "in one example", "an example", "in one feature" or "a feature" in various places throughout this specification are not necessarily all referring to the same feature and/or example. Furthermore, the particular features, structures, or characteristics may be combined in one or more examples and/or features.

Methodologies described herein may be implemented by various means depending upon applications according to particular features and/or examples. For example, such methodologies may be implemented in hardware, firmware, software, and/or combinations thereof. In a hardware implementation, for example, a processing unit may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other devices units designed to perform the functions described herein, and/or combinations thereof.

A "space vehicle" (SV) as referred to herein relates to an object that is capable of transmitting signals to receivers on the Earth's surface. In one particular example, such an SV may comprise a geostationary satellite. Alternatively, an SV may comprise a satellite traveling in an orbit and moving relative to a stationary position on the Earth. However, these are merely examples of SVs and claimed subject matter is not limited in these respects.

Location determination and/or estimation techniques described herein may be used for mobile devices in various wireless communication networks such as a wireless wide area network (WWAN), a wireless local area network (WLAN), a wireless personal area network (WPAN), and so on. Such location determination and/or estimation techniques described herein are also applicable to non-wireless communication devices performing Standalone/Autonomous GNSS and to autonomous GNSS receivers as wireless assisted GNSS receivers. Such non-wireless communication devices may also operate in an autonomous fashion without wireless network connectivity.

The term "network" and "system" may be used interchangeably herein. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as cdma2000, Wideband-CDMA (W-CDMA), to name just a few radio technologies. Here, cdma2000 may include technologies implemented according to IS-95, IS-2000, and IS-856 standards. A TDMA network may implement Global System for Mobile Communications (GSM), Digital Advanced Mobile Phone System (D-AMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may comprise an IEEE 802.11x network, and a WPAN may comprise a Bluetooth network, an IEEE 802.15x, for example. Such location determination techniques described herein may also be used for any combination of WWAN, WLAN and/or WPAN.

According to an example, a device and/or system may estimate its location based, at least in part, on signals received from SVs. In particular, such a device and/or system may obtain "pseudorange" measurements comprising approximations of distances between associated SVs and a navigation satellite receiver. In a particular example, such a pseudorange may be determined at a receiver that is capable of processing signals from one or more SVs as part of a Satellite Positioning System (SPS). To determine its location, a satellite navigation receiver may obtain pseudorange measurements to three or more satellites as well as their positions at time of transmitting.

Techniques described herein may be used with any one of several SPS' and/or combinations of SPS'. Furthermore, such techniques may be used with positioning determination systems that utilize pseudolites or a combination of satellites and pseudolites. Pseudolites may comprise ground-based transmitters that broadcast a PN code or other ranging code (e.g., similar to a GPS or CDMA cellular signal) modulated on an L-band (or other frequency) carrier signal, which may be synchronized with time. Such a transmitter may be assigned a unique PN code so as to permit identification by a remote receiver. Pseudolites are useful in situations where GPS signals from an orbiting satellite might be unavailable, such as in tunnels, mines, buildings, urban canyons or other enclosed areas. Another implementation of pseudolites is known as radio-beacons. The term "satellite", as used herein, is intended to include pseudolites, equivalents of pseudolites, and possibly others. The term "SPS signals", as used herein, is intended to include SPS-like signals from pseudolites or equivalents of pseudolites.

A "Global Navigation Satellite System" (GNSS) as referred to herein relates to an SPS comprising SVs transmitting synchronized navigation signals according to a common signaling format. Such a GNSS may comprise, for example, a constellation of SVs in synchronized orbits to transmit navigation signals to locations on a vast portion of the Earth's surface simultaneously from multiple SVs in the constellation.

Techniques described herein may also be applicable to regional satellite systems such as Quasi-Zenith Satellite System (QZSS), which is being deployed by Japan, and Indian Regional Navigational Satellite System (IRNSS), which is being deployed by India. Such regional satellite systems may comprise at least a portion of an SPS, as discussed above.

A GNSS satellite may transmit a navigation signal having multiple navigation signal components. The navigation signal components may be transmitted on the same or on different carrier frequencies. Moreover, the navigation signal components may also be transmitted on the same carrier frequency but on different baseband modulations, such as Binary Offset Carrier ("BOC") and Binary Phase Shift Keying ("BPSK"). The navigation signal components may be GNSS signal components modulated according to different code lengths. For example, one of the navigation signal components may be a legacy L1 C/A GPS signal, whereas a second navigation signal component may be a proposed data component of an L1C (L1C-D) GPS signal. However, these are merely examples of how multiple components of a navigation signal may be characterized, and claimed subject matter is not limited in this respect.

Each of multiple components of a navigation signal may be received by, for example, a receiver in a mobile station. Upon receipt, a navigation signal component may be correlated against a known reference code corresponding with the navigation signal component. For example, for each navigation signal component, a receiver may generate a reference code to correlate with the received navigation signal component.

A "false alarm" as referred to herein relates to an erroneous determination that a received signal has one or more certain characteristics, such as a known frequency, frequency range, or code phase (e.g., with respect to a PN code modulating the received signal). There may be different types of false alarms, such as (a) "noise false alarms" (e.g., false alarms due to Gaussian noise), (b) cross-correlations due to other, stronger GNSS signals corresponding to a satellite different from a particular satellite signal being sought, or (c) internal or external jammer signals. Upon receipt of such a signal, a navigation receiver may correlate the signal with a PN code of a desired navigation signal component. This correlation may yield a correlation peak in an energy grid defmed by code phase hypothesis and Doppler frequencies if noise false alarms, cross-correlations, or internal or external jammer signals are present. A false alarm may correspond to one or more peaks in such an energy grid are not due to a desired signal of interest such as, but not limited to examples (a) through (c), as discussed above.

However, if the associated navigation signal component is not present, there is a non-zero probability that the correlation process yields a peak that is due to receiver noise alone. Such a detection is referred to herein as a false alarm or a noise false alarm.

In one example, correlation of a received code sequence with a reference code may be performed in the time domain by integrating the product of the received and reference codes over some portion of the length of the reference code according to relation (1) as follows:

$$y(t) = \int_{k=0}^{N-1} x(t+k)r(k) \qquad (1)$$

where $x$ is the received code, $r$ is the reference code of length $N$, and $y(t)$ is the correlation result at offset $t$. Here, a received code may comprise a complex baseband signal, such that the correlation is performed for each of I and Q components of the received code.

An energy calculation may be performed on sampled received signal components. Depending on a particular design, energy results may be expressed as fixed-point or floating-point values, and they may in arbitrary units, e.g. in a case where the energy results are used only to determine relative differences between the peaks. In a case where an energy result may also be used for one or more other tasks (e.g. compared to other system parameters), the measurement scale may be selected as appropriate for such a task or tasks.

Transmitters located at different SVs may transmit navigation signals at the same frequency but with different spreading codes. A receiver may generate a local reference code for correlating a received navigation signal component as shown in relation (1) above. Such a receiver may receive multiple navigation signals from nearby SVs in some implementations. In a situation where a first SV, for example SV1, transmits a navigation signal component via a line-of-sight path to the receiver, the received navigation signal component will often be received with a higher signal strength than will a navigation signal components from a second SV, such as SV2, for which there is no line-of-sight propagation path.

A transmitter transmitting a navigation signal having multiple navigation signal components may be located on, for example, an SV or a terrestrial location. In one particular implementation, such a navigation signal may be received at a receiver on a mobile station (MS) such as MS 100 shown in FIG. 1, for example.

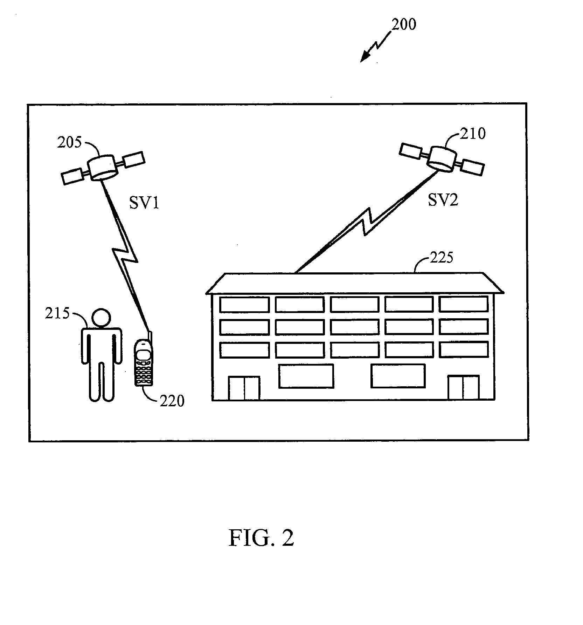

FIG. 2 illustrates a navigation system 200 according to one implementation. As shown, navigation system 200 includes satellites SV1 205 and SV2 210. A user 215 holds a receiver 220 located in a mobile station in this particular implementation. As shown, a direct line-of-sight path exists between SV1 205 and the receiver 220. However, there is no such line-of-sight path between SV2 210 and receiver 220, because building 225 is situated between SV2 210 and receiver 220. Accordingly, a navigation signal component transmitted by SV2 210 may travel through walls or other structural elements of the building 225, or may reflect off the building 225, prior to reaching the receiver 220, causing low signal power and/or multipath.

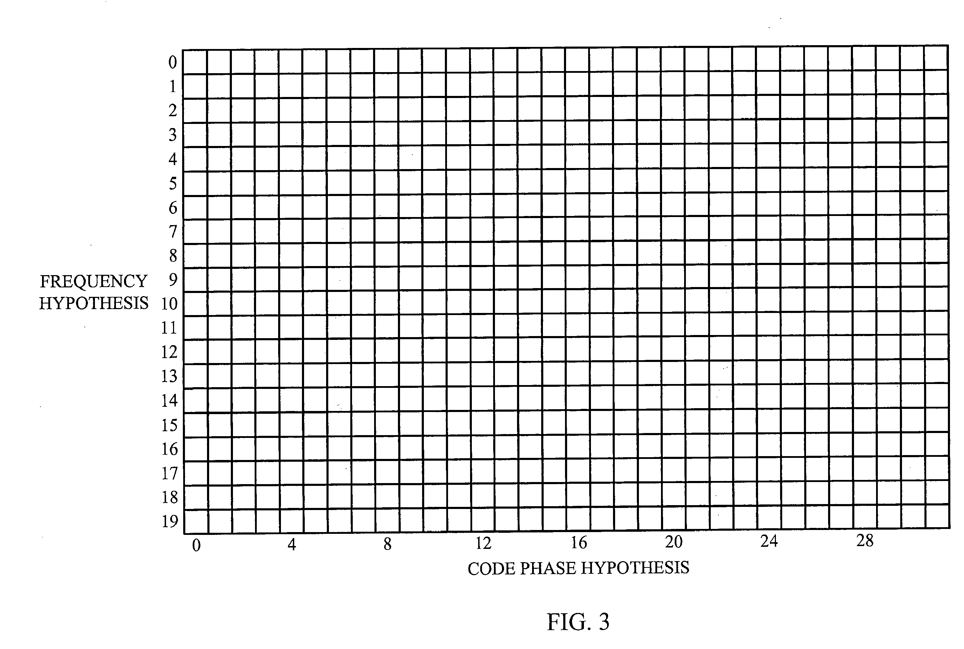

FIG. 3 shows an example of a code phase search window extending across twenty hypotheses in the frequency dimension and 32 code phase hypotheses or bins in a code phase dimension. Selection of the particular location and/or spacing of the hypotheses of each dimension of the code phase search window may be guided by information obtained externally and/or from one or more previous searches. For example, it may be known or estimated that a desired signal lies within a certain number of chips from a given code phase, and/or that the signal may be found within a certain bandwidth around a given frequency, such that the code phase search window may be defined accordingly. In a case where searches are to be conducted for more than one code, associated search windows need not have the same dimensions.

A search may be conducted (for example, according to a search window of D frequency hypotheses by C code hypotheses) to obtain a grid of D x C energy results, each result corresponding to one of the D frequency hypotheses and one of the C code hypotheses. The set of energy results that correspond to the code phase hypotheses for a particular frequency hypothesis are referred to herein as a "Doppler bin."

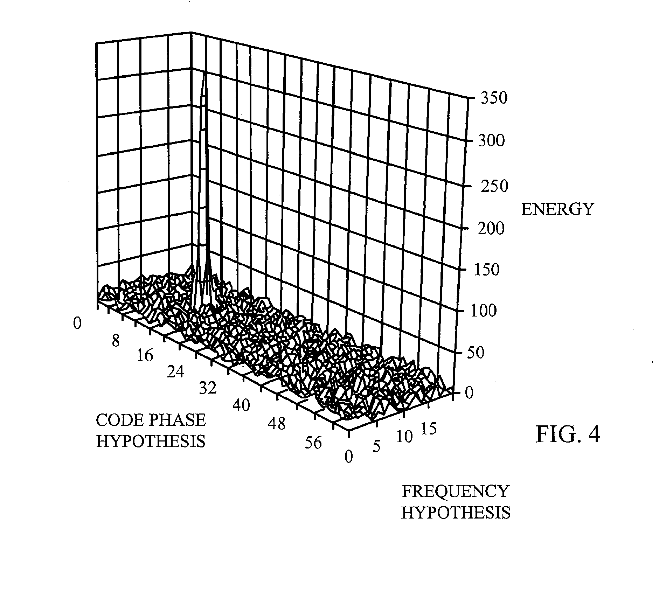

FIG. 4 shows an example of a peak within an energy profile or grid of twenty Doppler bins, each bin having 64 code phase hypotheses. In this example, adjacent code phase hypotheses are 1/2-chip apart, such that the grid extends across 32 chips in code space. An energy peak in this figure indicates a presence of the selected SV signal at code phase hypothesis 16 in Doppler bin 10. A receiver (or a searcher within such a device) may produce energy grids for several different corresponding SVs from the same portion of a received signal, with the grids possibly having different dimensions.

A received signal may include versions of the same transmitted signal that propagate over different paths to arrive at the receiver at different times. Correlation of such a received signal with the corresponding reference code may result in several peaks at different grid points, each peak due to a different instance (also called a multipath) of the transmitted signal. These multipath peaks may fall within the same Doppler bin.

Referring back to FIG. 2, in this implementation, receiver 220 may attempt to acquire a navigation signal component transmitted by SV1 205. A navigation signal component transmitted at a particular carrier frequency by SV1 205 may be received with a stronger signal power than a signal power of a received navigation signal component transmitted at the same carrier frequency by SV2 210. Even though navigation signal components transmitted by SV1 205 and SV2 210 may be transmitted at the same carrier frequency, in this example, they may be modulated with different spreading codes. Notwithstanding being modulated with different spreading codes, such navigation signal components transmitted by SV1 205 and SV2 210 may be cross-correlated. In the event that a navigation signal component transmitted by SV1 205 can be correlated with a reference code at receiver 220, any cross-correlations received from SV2 210 may have a much lower signal power, in this example, and the receiver 220 may determine that a signal received from SV2 210 is a cross-correlation and should therefore be ignored.

However, in the event that the receiver 220 is attempting to acquire a navigation signal component transmitted by SV2 210, as opposed to a navigation signal transmitted by SV1 205, a cross-correlation due to a navigation signal component transmitted by SV1 205 may lead to a false alarm. This may occur, for example, in a scenario where received energy of correlation detection of a cross-correlation due to the line-of-sight navigation signal component transmitted by SV1 205 may be higher than energy of a correlation detection of a navigation signal component transmitted by SV2 210. In this case here, the navigation signal component received from SV2 210 is not line-of-sight, because it travels through or reflects off of building 225.

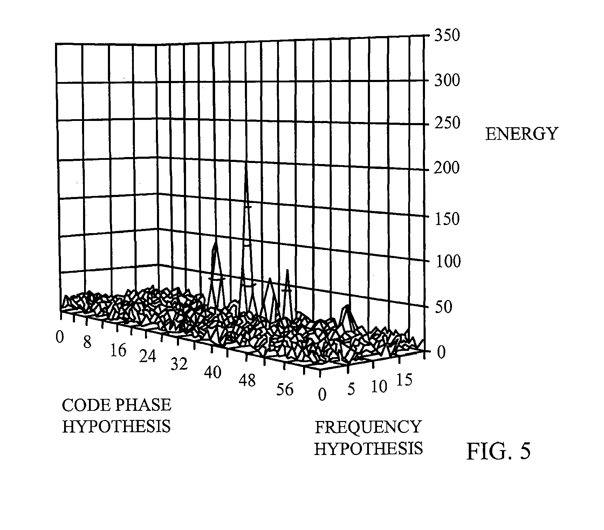

In one particular implementation, receiver 220 may determine whether multiple energy peaks on an energy profile or grid are false alarms caused by cross-correlations. FIG. 5 illustrates an example of multiple peaks within an energy profile or grid of twenty Doppler bins, each bin having 64 code phase hypotheses. In this example, there are four separate peaks having a normalized energy level above 50 on the displayed energy grid. The highest peak may correspond to the navigation signal component received from SV2 210, whereas the other peaks may be cross-correlations or due to other signal noise or multipath.

Receiver 220 may compare correlation peaks of the received signals corresponding to the energy peaks shown in, for example, FIG. 5, to determine which are cross-correlations. Correlation peaks (e.g., one from signals from each of SV1 205 and SV2 210) are compared pairwise (e.g., a correlation peak for a signal from SV1 205 is compared with a correlation peak for a signal from SV2 210). This comparison evaluates a difference in Carrier-to-Noise power ratio (C/No) and in Doppler shift between the two correlation peaks. If the weaker correlation peak is weaker than the stronger correlation peak by some predetermined amount and falls within a certain delta Doppler range (referred to herein as a cross-correlation mask), it may be categorized as a cross-correlation of the stronger peak. Such a cross-correlation may be disregarded.

A detection threshold may be selected specifically to limit the probably of false alarms (PFA) to be below a predetermined tolerable level. Detection thresholds may be set arbitrarily high to force the PFA to be arbitrarily low. However, there may be an associated penalty in the probability of detection (PD) corresponding to a case where a navigation signal component of interest, in fact, is correlated with a reference code to provide an energy peak.

There is, however, a penalty with allowing the PFA to be too high. A false alarm, if incorporated in the GNSS location solution, may lead to a solution with a significant error in a position estimate. Therefore, care may be taken in selecting a PFA balancing the achievable sensitivity against the impact on position.

Two serial correlations on a received signal may be performed to reduce the final PFA. By performing serial correlations, for example, it may be possible to determine whether any energy peaks in a signal correlation were due to random noise. For example, two serial correlations against a navigation signal component with targeted PFA values PFA1 and PFA2, respectively, may have a resulting PFA = PFA1 * PFA2 (e.g., assuming that the two consecutive detections are required in order to determine whether an energy peak is due to a particular navigation signal component, there would have to have two noise false alarms in order for a detection to occur, an unlikely event). This probability may be further reduced if a code phase consistency check is imposed. A code phase consistency check may determined whether a code phase found from a first correlation and a code phase found from a second correlation are reasonably close (e.g., the respective code phases should be the exactly the same if the signals are received line-of-sight and there is no relative motion between the satellite and the user). If the navigation signal component is a line-of-sight reception at the receiver 220, then both detections of the signal may be virtually the same in code phase.

In the presence of multipath, for example, both serial detections of a navigation signal component may also be very close in code phase. Supposing that a code phase or code phase hypothesis search window for these serial searches extends W chips and multipath detections are no more that T chips apart from detection of a line of sight signal, a classification may be made. Specifically, if detections from the two correlations are less than T chips apart, this may be classified as a valid detection and the earlier of the two code phases would be selected; otherwise, both measurements may be rejected as false alarms. In one implementation, the earlier code phase may be selected over the two measurements because signals with less multipath would be received earlier (i.e., they are travelling over a shorter distance).

This algorithm may reduce an overall false alarm probability to PFA = PFA1 * PFA2 * T / W. The PFA = PFA1 * PFA2 * T/W formula may be determined based on basic probability. That is, if noise causes a false alarm somewhere in an energy grid (i.e., occurs with probability PFA1), then the probability of a second false alarm occurring within T hypotheses of the first is PFA2 * T/W (i.e, PFA1 = PFA2 if the search parameters don't change between the two searches).

For receivers tracking a single navigation signal component at a single frequency, use of such serial correlations may be applied to manage false alarm probability to enhance sensitivity of receiver 220.

In the event that an SV, for example, transmits multiple spread spectrum signals at the same or different frequencies, it may also possible to improve the detection and classification of such noise false alarms based on correlation of the multiple spread spectrum signals. For example, correlations may be performed in parallel against each of the spread spectrum signals.

In one implementation, acquiring navigation signal components may comprise performing a correlation of a received signal against a spreading or reference code of a desired navigation signal component. Such a correlation operation may yield a well-defined peak in time and frequency for line-of-sight satellite signals, such as navigation signal components transmitted from SV1 205 illustrated in FIG. 2. However, other navigation signal components may be severely attenuated such that a correlation operation does not yield a well-defined peak, such as navigation signal components transmitted by SV2 210. In such cases, it is possible that a correlation operation to acquire a navigation signal component from blocked satellite SV2 210 will, instead, exhibit cross-correlation peaks due to the stronger, unobstructed navigation signal component transmitted by SV1 205. Such peaks may be artifacts of cross-correlation properties of spreading codes used to modulate signals transmitted by respective satellites. Such correlation peaks may represent false alarms because they do not provide ranging information for the desired satellite SV2 210, and rather are artifacts of some other, stronger satellite, SV1 205 in this particular example. For this reason, such artifacts can be detected and classified as cross-correlations and deleted and/or ignored such that they do not bias calculated positions.

Cross-correlations may exhibit some fairly well defined properties. For a GPS L1 C/A code, for example, a cross-correlation peak in one particular example, for the purpose of illustration, may be about 21 dB or more below a Carrier to Noise Ratio (C/N) of a source signal generating cross-correlations. In addition, such cross-correlations may found to be some multiple of 1 KHz away from the source signal in the Doppler dimension. Referring back to FIG. 5, for example, if a source signal is observed at a particular code phase and a Doppler of 2100 Hz, cross-correlations may be detected at various Doppler values (e.g. 4100 Hz, -1900 Hz, etc.) and at various code phase offsets as per the cross-correlation function. The code phase offsets and relative strengths may be determined by the cross-correlation function of the two spreading codes in question. For other navigation signal components (e.g., Galileo, GLONASS, etc.), cross-correlations similarly may exist between spreading codes within the respective satellite systems, and may exhibit similar properties.

In particular implementations, cross-correlation detection operations may compare weak correlation detections (i.e., low energy peaks) with strong correlation detections (i.e., large energy peaks) to determine whether such detections are close in Doppler (e.g., small delta Doppler modulo 1 KHz) and substantially far apart in signal strength (e.g., greater than a 21 dB difference in strength).

Such weak correlation detections may be the result of either cross-correlations or legitimate navigation signal components. In one implementation, a valid measurement of correlation detections that appears to be a cross-correlation may be discarded over an actual cross-correlation in a position fix, since the latter may lead to an outlier position (position fix with very large error), which may be worse than a soft degradation in accuracy due to losing one valid navigation signal measurement.

If a particular SV transmits multiple spread spectrum navigation signals (i.e., multiple navigation signals) at the same or different frequencies, it may be possible to perform correlation detections in parallel on the navigation signals to improve classification of such weak measurements. Performing such correlation detections in parallel may (a) improve cross-correlation detection robustness (i.e., less cross-correlation false alarms) and (b) improve detection of valid measurements that might otherwise be classified as cross-correlations (i.e., less valid measurements discarded).

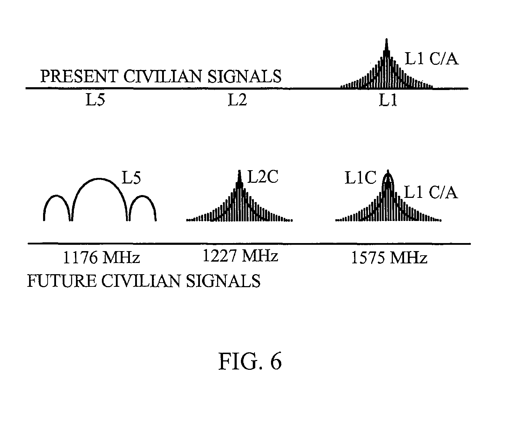

GNSS modernization, for example, may include new civilian signals, such as those illustrated in FIG. 6. Proposed new GNSS signals include, for example, GPS signals such as the so-called L2C, L5 and L1C. The former two may be transmitted at different frequency bands (e.g., L2 band = 1.227 GHz, L5 band = 1.176 GHz) and the latter co-exists with the legacy C/A signal in the L1 band. Such GPS signals may be modulated by spreading codes significantly different from a spreading code used for a legacy GPS C/A waveform or are at different frequencies.

In the event that transmitters, such as those on an SV, transmit multiple navigation signal components at different frequencies, such as a legacy L1 C/A navigation signal component, and an L2C and/or L5 navigation signal component, information corresponding to both multiple received navigation signal components from a single SV may be used to decrease PFA associated with correlation of the navigation signal components.

Similarly, proposed Galileo GNSS constellation may transmit multiple civilian signals in various frequency bands. In general, for an arbitrary navigation system (e.g., GPS, Galileo, GLONASS, etc.), if a given satellite transmits multiple navigation signal components at the same or different frequencies, it is possible to reduce the PFA by performing serial correlations on the various received navigation signal components from the satellite.

In a particular implementation where a GNSS receiver, such as receiver 220 depicted in FIG. 2, is capable of detecting multiple distinct navigation signal components transmitted from the same satellite, operations may be applied to enhance identification of noise false alarms and reduce an overall PFA associated with correlation of the navigation signal components. This may enable targeted increases in a PFA of individual correlations to enhance sensitivity.

Likewise, several operations may be applied to enhance accurate identification of cross-correlations and reduce the probability of rejecting valid correlation detections that might resemble cross-correlations.

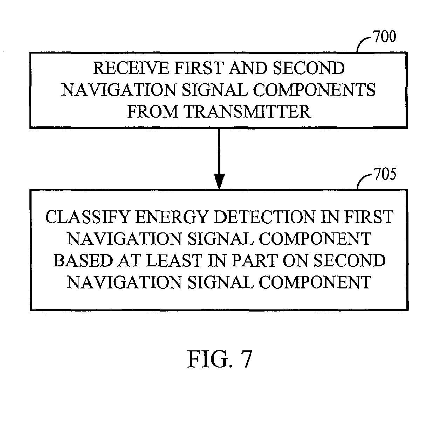

FIG. 7 illustrates a method of classifying an energy detection in a first navigation signal component according to one implementation. First, at operation 700, first and second navigation signal components are received from a transmitter. The transmitter may be located at an SV, for example. Next, at operation 705, an energy detection in the first navigation signal component may be classified based, at least in part, on the second navigation signal component. For example, by analyzing both the first and second navigation signal components in parallel, the probability of false alarm can be reduced. Because the same transmitter transmits both the first and second navigation signal components, they may be analyzed to determine whether they are consistent. Signals transmitted from the same transmitter, such as an SV, are consistent if they indicate the same position and velocity vector between a receiver and the SV. For example, signals on different carrier frequencies may give Doppler shifts of $v*f1/c$ and $v*f2/c$ (i.e., for carrier frequencies f1 and f2) even though it is the same relative velocity between the receiver and the SV. In one implementation, if the two signals are consistent, but utilize different spreading codes, they may indicate the same time-of-arrival of the signal using their respective codes.

Such information can be used to determine whether an energy peak is a correlation with a navigation signal component of interest, or merely a cross-correlation with another signal or the result of a "jammer." A jammer signal may comprise a noise signal received from a source other than the satellite from which the first and second navigation signal components of interest are transmitted.

In one particular implementation, a cross-correlation operation may take as inputs a pair of strong and weak energy detections as discussed above. Here, a strong energy detection may be associated with a "reference measurement" of a "reference satellite." A weak energy detection may be associated with a "candidate measurement(s)" of a "candidate satellite" ("candidate" is used here in the context of being a candidate to be classified as a cross-correlation).

Given a reference satellite measurement, a receiver may analyze one or more characteristics of received signals, such as, for example, energy peaks after correlation detection to determine whether any energy peaks are due to cross-correlations. A candidate satellite may be searched for across multiple satellite signals, where the various signals may be at the same frequency or at other frequencies from that of the reference measurement. In other words, a receiver may attempt to detect whether a cross-correlation due to a candidate satellite is detected in correlation detection of a received navigation signal component.

If this candidate search yields exactly one energy peak detection, the receiver may then attempt to determine whether the energy peak corresponds to a navigation signal component or a cross-correlation. A cross-correlation operation be performed that may comprise, for example, comparing a C/No difference and a Doppler difference for the reference measurement and candidate measurement.

If, however, the candidate search yields two or more energy peak detections corresponding to 2 or more distinct signals transmitted at the same and/or different frequencies, then several other consistency checks can be performed. Due to the different spreading codes used to modulate these different signals, a cross-correlation seen for one signal may have a random code phase with respect to the cross-correlation seen for another signal. Improved detection and classification operations may utilize this feature to improve detection of a navigation signal component.

Tables A-C shown below depict one possible consistency-checking operation relating to receipt of first and possibly second navigation signal components transmitted from the same SV. Such an operation may allow for lower PFA and recovery of measurements that fall within a cross-correlation mask (i.e., a determined frequency and code phase of a cross-correlation) of another satellite transmitting signals. Signals that are contaminated by jammer frequencies may also be recovered if two independent measurements yield a consistent result.

| Table A | |
|---|---|
| Only one navigation signal component is detected | |
| Detection of second navigation signal component expected? | Pass navigation signal component? |
| Yes | No |
| No | Yes |

Table A illustrates decisions /processing relating to determining whether a received navigation signal component is a first navigation signal component or is a cross-correlation or jammer. Such decisions/processing may occur when only one navigation signal component is detected. Receiver 220 may perform this processing in some implementations. A determination may be made, based on the signal strength of a received navigation signal component, as to whether a second navigation signal component is detectable/expected. In an example where a navigation signal component is received with a signal strength above a predetermined level, receiver 220 may determine that a second navigation signal component is detectable under certain circumstances. If receiver 220 determines that a second navigation signal component is detectable/expected, the received navigation signal component is not passed for further processing because, e.g., the received signal component is not the first navigation signal component from the desired satellite. For example, the received navigation signal component may be a cross-correlation, jammer, or some other type of noise. On the other hand, if receiver 220 determines that a second navigation signal component is not detectable/expected, the received navigation signal component is accepted, the test is passed, and additional tests may be performed on the received navigation signal component.

By making the decisions in accordance with the options in Chart A, a probability of false alarm may be decreased because receiver 220 can determine whether a received navigation signal component is likely noise as opposed to a navigation signal component.

Tables B and C shown below illustrate decisions /processing that may occur in an example where both first and second navigation signal components are received and receiver 220 determines whether these navigation signal components are transmitted from a desired satellite or are cross-correlations, jammers, or other noise. Table B relates to the performance of cross-correlation consistency checks and Table C relates to jammer consistency checks. The jammer consistency checks may be performed to determine whether a received signal is a jammer signal, as opposed to being one of the first or second navigation signal components. As discussed above, a jammer signal may comprise a noise signal received from a source other than a satellite from which the first and second navigation signal components of interest are transmitted.

| Table B | | | | |
| --- | --- | --- | --- | --- |
| Cross-correlation consistency check | | | | |
| First navigation signal component cross-correlation check | Second navigation signal component cross-correlation check | Are first and second navigation signal components consistent? | Pass first navigation signal component measurement? | Pass second navigation signal component measurement? |
| Pass | Pass | Yes | Yes | Yes |
| Fail | Pass | Yes | Yes | Yes |
| Pass | Fail | Yes | Yes | Yes |
| Fail | Fail | Yes | Yes | Yes |
| Pass | Pass | No | No | No |
| Fail | Pass | No | No | Yes |
| Pass | Fail | No | Yes | No |
| Fail | Fail | No | No | No |

Table B lists several decisions that may be made by receiver 220. Such decisions include the results of cross-correlation checks for the first and second navigation signal components, a determination of whether the first and second navigation signal components are consistent, and whether to pass either of the first or second navigation signal components for additional processing/testing. As discussed above, correlation peaks (e.g., one from signals from each of SV1 205 and SV2 210) are compared pairwise and if the weaker correlation peak is weaker than the stronger correlation peak by some predetermined amount and falls within a certain delta Doppler range, it may be categorized as a cross-correlation of the stronger peak.

Another determination to be made is whether the first and the second navigation signal components are "consistent" with each other. As discussed above, navigation signal components transmitted from the same transmitter, such as an SV, are "consistent" if, for example, they indicate the same position and velocity vector between a receiver and the SV.

If the first and the second navigation signal components are consistent, then both may be determined to be the respective first and second navigation signal components for which receiver 220 was searching and both therefore pass the cross-correlation consistency checks and may be passed for further signal processing, regardless of whether either passes or fails their respective cross-correlation checks.

If the first and second navigation signal components are not consistent, on the other hand, receiver 220 may determine that either only one, or neither, of the received navigation signal components passes the cross-correlation consistency check. If, for example, the first and second navigation signal components either both pass or both fail their respective cross-correlation checks, neither passes the cross-correlation consistency check. If both passed the cross-correlation check, receiver 220 may determine that both navigation signal components are false alarms because they are not consistent. If both failed, on the other hand, receiver 220 determines that both navigation signal components are cross-correlations.

If the first and second navigation signal components are not consistent and only the first navigation signal component passes its cross-correlation check, the second navigation signal component may be determined to be a cross-correlation. In this example, only the first navigation signal component may pass the cross-correlation consistency check and be subjected to additional signal processing. On the other hand, if the first and second navigation signal components are not consistent and only the second navigation signal component passes its cross-correlation check, the first navigation signal component may be determined to be a cross-correlation. In this example, only the second navigation signal component may pass the cross-correlation consistency check and be subj ected to additional signal processing.

Table C lists several decisions relating to jammer consistency checks that may be made by receiver 220.

| Table C | | | | |
| Jammer consistency check | | | | |
| First navigation signal component jammer check | Second navigation signal component jammer check | Are first and second navigation signal components consistent? | Pass first navigation signal component measurement? | Pass second navigation signal component measurement? |
|---|---|---|---|---|
| Pass | Pass | Yes | Yes | Yes |
| Fail | Pass | Yes | Yes | Yes |
| Pass | Fail | Yes | Yes | Yes |
| Fail | Fail | Yes | Yes | Yes |
| Pass | Pass | No | No | No |
| Fail | Pass | No | No | Yes |
| Pass | Fail | No | Yes | No |
| Fail | Fail | No | No | No |

The decisions relating to Table C include results of jammer consistency checks for the first and second navigation signal components, a determination of whether the first and second navigation signal components are consistent, and whether to pass either the first or second navigation signal components for additional processing/testing.

Either of the first and second navigation signal components may fail the jammer check if they satisfy a number of checks to determine whether, for example, a correlation peak is due to a jammer signal, as opposed to being due the first and second navigation signal components.

If a noisy jammer signal is received, such jammer signal may exhibit a signal strength above the threshold level. It should be appreciated that in performing a jammer check on the first navigation signal component, a different threshold level may be used than when a jammer check is performed on the second navigation signal component.

Another determination to be made is whether the first and the second navigation signal components are "consistent" with each other. If the first and the second navigation signal components are consistent, then both are determined to be the respective first and second navigation signal components for which receiver 220 was searching and both may therefore pass the jammer consistency checks and proceed to further signal processing, regardless of whether either passes or fails their respective jammer checks.

If, for example, the first and second navigation signal components are not consistent, receiver 220 may determine that either only one, or neither, of the received navigation signal components passes the jammer consistency check. If the first and second navigation signal components either both pass or both fail their respective jammer checks, neither may pass a jammer consistency check. If both passed their respective jammer checks, receiver 220 may determine that both navigation signal components are false alarms because they are not consistent. If both failed, on the other hand, receiver 220 may determine that both navigation signal components are ammers.

If, for example, the first and second navigation signal components are not consistent and only the first navigation signal component passes its jammer check, the second navigation signal component may be determined to be a jammer. In this example, only the first navigation signal component may pass the jammer consistency check and be subjected to additional signal processing. On the other hand, in the event that the first and second navigation signal components are not consistent and only the second navigation signal component passes its jammer check, the first navigation signal component may be determined to be a jammer. In this example, only the second navigation signal component may pass the jammer consistency check and be subjected to additional signal processing.

Although only cross-correlation and jammer consistency checks are illustrated in Tables B and C, it should be appreciated that additional consistency checks may also or alternatively be performed. Performing such cross-correlation and jammer consistency checks can reduce the probability of false alarms, potentially leading to more accurate position determinations from received GNSS signals, such as, for example, GPS signals.

Consistency checks, such as cross-correlation and/or jammer consistency checks as discussed above, may be performed on the respective signals obtained by two separate RF receivers located, for example, within a single device. Such RF receivers may be referred to as "diversity receivers," and may process the same signal received at the same frequency. In one implementation, for example, a first receiver may receive a navigation signal component and a second receiver may also separately receive the same navigation signal component. Consistency checks may subsequently be performed on the different instances of the navigation signal as received by the first and second receivers.

In one diversity receiver implementation, a first receiver may receive a navigation signal component and may determine a first navigation signal component detection based on the received navigation signal component. A second receiver may also receive the navigation signal component and may determine a second navigation signal component detection based on the received navigation signal component. A processor may subsequently perform consistency checks on the first and second navigation signal component detections.

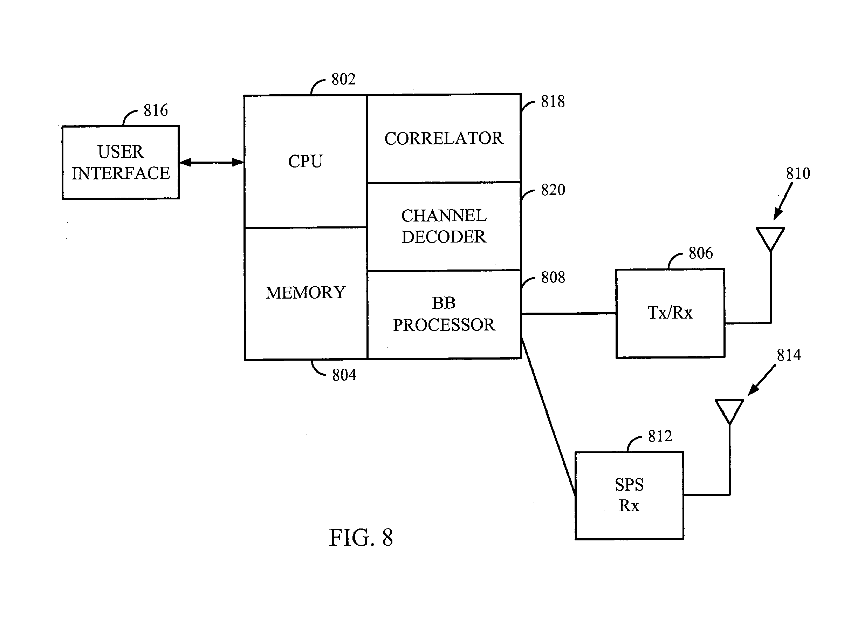

FIG. 8 shows a particular implementation of an MS in which radio transceiver 806 may be adapted to modulate an RF carrier signal with baseband information, such as voice or data, onto an RF carrier, and demodulate a modulated RF carrier to obtain such baseband information. An antenna 810 may be adapted to transmit a modulated RF carrier over a wireless communications link and receive a modulated RF carrier over a wireless communications link.

Baseband processor 808 may be adapted to provide baseband information from CPU 802 to transceiver 806 for transmission over a wireless communications link. Here, CPU 802 may obtain such baseband information from an input device within user interface 816. Baseband processor 808 may also be adapted to provide baseband information from transceiver 806 to CPU 802 for transmission through an output device within user interface 816.

User interface 816 may comprise a plurality of devices for inputting or outputting user information such as voice or data. Such devices may include, for example, a keyboard, a display screen, a microphone, and a speaker.

SPS receiver (SPS Rx) 812 may be adapted to receive and demodulate transmissions from SVs through SPS antenna 814, and provide demodulated information to correlator 818. Correlator 818 may be adapted to derive correlation functions from the information provided by receiver 812. For a given PN code, for example, correlator 818 may produce a correlation function defined over a range of code phases to set out a code phase search window, and over a range of Doppler frequency hypotheses as illustrated above. As such, an individual correlation may be performed in accordance with defined coherent and non-coherent integration parameters.

Correlator 818 may also be adapted to derived pilot-related correlation functions from information relating to pilot signals provided by transceiver 806. This information may be used by a subscriber station to acquire wireless communications services.

Channel decoder 820 may be adapted to decode channel symbols received from baseband processor 808 into underlying source bits. In one example where channel symbols comprise convolutionally encoded symbols, such a channel decoder may comprise a Viterbi decoder. In a second example, where channel symbols comprise serial or parallel concatenations of convolutional codes, channel decoder 820 may comprise a turbo decoder.

Memory 804 may be adapted to store machine-readable instructions, which are executable to perform one or more of processes, examples, implementations, or examples thereof which have been described or suggested. CPU 802 may be adapted to access and execute such machine-readable instructions. Through execution of these machine-readable instructions, CPU 802 may direct correlator 818 to analyze the SPS correlation functions provided by correlator 818, derive measurements from the peaks thereof, and determine whether an estimate of a location is sufficiently accurate. However, these are merely examples of tasks that may be performed by a CPU in a particular aspect and claimed subject matter in not limited in these respects.

In a particular example, CPU 802 at a subscriber station may estimate a location the subscriber station based, at least in part, on signals received from SVs as illustrated above. CPU 802 may also be adapted to determine a code search range for acquiring a second received signal based, at least in part, on a code phase detected in a first received signals as illustrated above according to particular examples.

Although a radio transceiver 806 is depicted in FIG. 8, it should be appreciated that non-communication devices may be utilized in other implementations. Moreover, although only one SPS and one radio transceiver 806 are illustrated in FIG. 8, it should be appreciated that other implementations may utilize multiple antennas and/or multiple receivers.

The various methods described herein may be implemented to reduce the probability of false alarms and improve overall system performance.

While there has been illustrated and described what are presently considered to be example features, it will be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter may also include all aspects falling within the scope of appended claims, and equivalents thereof.

**FURTHER SUMMARY OF THE INVENTION**

What is claimed is:

1. A method, comprising:

receiving a first navigation signal component and a second navigation signal component from a transmitter; and
classifying an energy detection in the first navigation signal component based at least in part on the second navigation signal component.

2. The method of 1, wherein the classifying comprises classifying the energy detection in the first navigation signal component as a false alarm in response to determining that the energy detection in the first navigation signal component is not correlated in at least one of Doppler and in code phase with an energy detection in the second navigation signal component.

3. The method of 1, wherein the classifying comprises comparing at least one characteristic between the energy detection in the first navigation signal component and an energy detection in the second navigation signal component.

4. The method of 3, wherein the at least one characteristic comprises at least one of a Carrier-to-Noise power ratio difference and a Doppler shift difference between the energy detection in the first navigation signal component and the energy detection in the second navigation signal component.

5. The method of 4, wherein the energy detection comprises a correlation peak.

6. The method of 1, further comprising implementing a jammer test on the first navigation signal component and the second navigation signal component.

7. The method of 1, wherein the classifying comprises determining whether both the energy detection in the first navigation signal component and an energy detection in the second navigation signal component are false alarms based, at least in part, on a determination that the energy detection in the first navigation signal component and the energy detection in the second navigation signal component are not correlated in at least one of Doppler and in code phase.

8. The method of 7, wherein the classifying further comprises classifying the energy detections in the first and second navigation signal components as false alarms based, at least in part, on a result of at least one test selected from the group of tests comprising a cross-correlation test and a jammer test.

9. The method of 1, wherein the classifying comprises determining that the energy detection in the first navigation signal component is not a false alarm based, at least in part, on:

a determination that the energy detection in the first navigation signal component and an energy detection in the second navigation signal component are not correlated in at least one of Doppler and in code phase; and
a determination that the energy detection in the first navigation signal component passes at least one signal test.

10. The method of 1, wherein the first navigation signal component is transmitted at a first carrier frequency, the second navigation signal component is transmitted at a second carrier frequency, the first carrier frequency being separated by at least 50 Mega Hz.

11. The method of 1, wherein the receiving and the classifying are each performed by at least two receivers of a device.

12. An apparatus, comprising:

a receiver to receive a first navigation signal component and a second navigation signal component from a transmitter; and
a processor to classify an energy detection in the first navigation signal component based at least in part on the second navigation signal component.

13. The apparatus of 12, wherein the processor is adapted to classify the energy detection in the first navigation signal component as a false alarm in response to determining that the first navigation signal component and the second navigation signal component are not correlated in at least one of Doppler and in code phase.

14. The apparatus of 12, wherein the processor is adapted to classify the energy detection in based, at least in part, on a comparison of at least one characteristic between the energy detection in the first navigation signal component and an energy detection in the second navigation signal component.

15. The apparatus of 14, wherein the at least one characteristic comprises at least one of a Carrier-to-Noise power ratio difference and a Doppler shift difference between the energy detection in the first navigation signal component and the energy detection in the second navigation signal component.

16. The apparatus of 12, wherein the processor is adapted to classify the energy detection based, at least in part, on an implementation of a jammer test on the first navigation signal component and the second navigation signal component.

17. The apparatus of 12, wherein the processor is adapted to classify the energy detection based, at least in part, on an implementation of a cross-correlation test on the first navigation signal component and the second navigation signal component.

18. The apparatus of 12, wherein the processor is adapted to determine that the energy detection in the first navigation signal component is not a false alarm based, at least in part, on:

a determination that the energy detection in the first navigation signal component and an energy detection in the second navigation signal component are not correlated in at least one of Doppler and in code phase; and a determination that the energy detection in the first navigation signal component passes at least one signal test.

19. An apparatus, comprising:

receiving means for receiving a first navigation signal component and a second navigation signal component from a transmitter; and processing means for classifying an energy detection in the first navigation signal component based at least in part on the second navigation signal component.

20. The apparatus of 19, wherein the processing means is adapted to classify the energy detection in based, at least in part, on a comparison of at least one characteristic between the energy detection in the first navigation signal component and an energy detection in the second navigation signal component.

21. The apparatus of 20, wherein the at least one characteristic comprises at least one of a Carrier-to-Noise power ratio difference and a Doppler shift difference between the energy detection in the first navigation signal component and the energy detection in the second navigation signal component.

22. The apparatus of 19, wherein the processing means is adapted to classify the energy detection in based, at least in part, on a cross-correlation test of the first navigation signal component and the second navigation signal component.

23. The apparatus of 19, wherein the processing means is adapted to classify the energy detection based, at least in part, on an implementation of a jammer test on the first navigation signal component and the second navigation signal component.

24. The apparatus of 19, wherein the processing means is adapted to determine whether the first navigation signal component and the second navigation signal component are false alarms based, at least in part, on a determination that the energy detection in the first navigation signal component and an energy detection in the second navigation signal component are not correlated in at least one of Doppler and in code phase.

25. An article comprising: a storage medium comprising machine-readable instructions stored thereon which, if executed by a computing platform, are adapted to enable the computing platform to:

receive a first navigation signal component and a second navigation signal component from a transmitter; and classify an energy detection in the first navigation signal component based at least in part on the second navigation signal component.

26. The article of 25, wherein the classifying the energy detection comprises classifying the energy detection in the first navigation signal component as a false alarm in response to determining that the energy detection in the first navigation signal component is not correlated in at least one of Doppler and in code phase with an energy detection in the second navigation signal component.

27. The article of 25, wherein the classifying the energy detection comprises comparing at least one characteristic between the energy detection in the first navigation signal component and an energy detection in the second navigation signal component.

28. The article of 27, wherein the at least one characteristic comprises at least one of a Carrier-to-Noise power ratio difference and a Doppler shift difference between the energy detection in the first navigation signal component and the energy detection in the second navigation signal component.

29. The article of 25, wherein the machine-readable instructions are further adapted to implement a jammer test on the first navigation signal component and the second navigation signal component.

30. The article of 25, wherein the classifying the energy detection comprises determining whether both the energy detection in the first navigation signal component and an energy detection in the second navigation signal component are false alarms based, at least in part, on a determination that the energy detection in the first navigation signal component and the energy detection in the second navigation signal component are not correlated in at least one of Doppler and in code phase.

31. The article of 30, wherein the classifying the energy detection further comprises classifying the energy detections in the first and second navigation signal components as false alarms based, at least in part, on a result of at least one test selected from the group of tests comprising a cross-correlation test and a jammer test.

32. The article of 25, wherein the classifying the energy detection comprises determining that the energy detection in the first navigation signal component is not a false alarm based, at least in part, on:

a determination that the energy detection in the first navigation signal component and an energy detection in the second navigation signal component are not correlated in at least one of Doppler and in code phase; and a determination that the energy detection in the first navigation signal component passes at least one signal test.

33. A method, comprising:

receiving, by a first receiver, a navigation signal component from a transmitter and determining a first navigation signal component detection; receiving, by a second receiver, the navigation signal component from the transmitter and determining a second navigation signal component detection; classifying an energy detection in the navigation signal component based at least in part on the first and second navigation signal component detections.

34. The method of 33, wherein the classifying comprises classifying the energy detection in the navigation signal component as a false alarm in response to determining that the first navigation signal component detection is not correlated in at least one of Doppler and in code phase with the second navigation signal component detection.

35. The method of 33, wherein the classifying comprises comparing at least one characteristic between the first navigation signal component detection and the second navigation signal component detection.

36. The method of 35, wherein the at least one characteristic comprises at least one of a Carrier-to-Noise power ratio difference and a Doppler shift difference between the first navigation signal component detection and the second navigation signal component detection.

37. The method of 33, wherein the energy detection comprises a correlation peak.

38. The method of 33, further comprising implementing a jammer test on the first navigation signal component detection and the second navigation signal component detection.

39. An apparatus, comprising:

a first receiver to receive a navigation signal component from a transmitter and to determine a first navigation signal component detection; a second receiver to receive the navigation signal component from the transmitter and to determine a second navigation signal component detection; and

a processor to classify an energy detection in the navigation signal component based at least in part on the first and second navigation signal component detections.

40. The apparatus of 39, wherein the processor is adapted to classify the energy detection in the navigation signal component as a false alarm in response to determining that the first and second navigation signal component detections are not correlated in at least one of Doppler and in code phase.

41. The apparatus of 39, wherein the processor is adapted to classify the energy detection in based, at least in part, on a comparison of at least one characteristic between the first navigation signal component detection and the second navigation signal component detection.

42. The apparatus of 41, wherein the at least one characteristic comprises at least one of a Carrier-to-Noise power ratio difference and a Doppler shift difference between the first navigation signal component detection and the second navigation signal component detection.

43. The apparatus of 39, wherein the processor is adapted to classify the energy detection based, at least in part, on an implementation of a jammer test on the first navigation signal component detection and the second navigation signal component detection.

44. The apparatus of 39, wherein the processor is adapted to classify the energy detection based, at least in part, on an implementation of a cross-correlation test on the first navigation signal component detection and the second navigation signal component detection.

45. An apparatus, comprising:

first receiving means for receiving a navigation signal component from a transmitter and for determining a first navigation signal component detection;
second receiving means for receiving the navigation signal component from the transmitter and for determining a second navigation signal component detection; and
processing means for classifying an energy detection in the navigation signal component based at least in part on the first and second navigation signal component detections.

46. The apparatus of 45, wherein the processing means is adapted to classify the energy detection in based, at least in part, on a comparison of at least one characteristic between the first navigation signal component detection and the second navigation signal component detection.

47. The apparatus of 46, wherein the at least one characteristic comprises at least one of a Carrier-to-Noise power ratio difference and a Doppler shift difference between the first navigation signal component detection and the second navigation signal component detection.

48. The apparatus of 45, wherein the processing means is adapted to classify the energy detection in based, at least in part, on a cross-correlation test of the first navigation signal component detection and the second navigation signal component detection.

49. The apparatus of 45, wherein the processing means is adapted to classify the energy detection based, at least in part, on an implementation of a jammer test on the first navigation signal component detection and the second navigation signal component detection.

50. An article comprising: a storage medium comprising machine-readable instructions stored thereon which, if executed by a computing platform, are adapted to enable the computing platform to:

receive, by a first transmitter, a navigation signal component from a transmitter and to determine a first navigation signal component detection;
receive, by a second transmitter, the navigation signal component from the transmitter and to determine a second navigation signal component detection; and
classify an energy detection in the navigation signal component based at least in part on the first and second navigation signal component detections.

51. The article of 50, wherein the classifying the energy detection comprises classifying the energy detection in the navigation signal component as a false alarm in response to determining that the first navigation signal component detection is not correlated in at least one of Doppler and in code phase with the second navigation signal component detection.

52. The article of 50, wherein the classifying the energy detection comprises comparing at least one characteristic between the first navigation signal component detection and the second navigation signal component detection.

53. The article of 52, wherein the at least one characteristic comprises at least one of a Carrier-to-Noise power ratio difference and a Doppler shift difference between the first navigation signal component detection and the second navigation signal component detection.

54. The article of 50, wherein the machine-readable instructions are further adapted to implement a jammer test on the first navigation signal component detection and the second navigation signal component detection.

**Claims**

1. A method, comprising:

receiving, by a receiver of a device, a composite signal including a first navigation signal component and a second navigation signal component transmitted by a transmitter;
determining position measurement information for each of the first navigation signal component and the second navigation signal component; and
performing a consistency check for the first and second navigation signal components, wherein the consistency check is valid if the determined position measurement information for the first and second navigation signal components are consistent with one another, and wherein the consistency check is invalid if the determined position measurement information for the first and second signal navigation components are not consistent with one another.

2. The method of claim 1, wherein the consistency check further comprises determining that the first and second navigation signal components are consistent with one another by validating that the determined position measurement information for the first and second navigation signal components are within a predetermined threshold of each other.

3. The method of claim 1, wherein the consistency check further comprises determining that the first and second navigation signal components are not consistent with one another by validating that the determined position measurement information for the first and second navigation signal components are not within a predetermined threshold of each other.

4. An apparatus, comprising:

receiving means for receiving a composite signal including a first navigation signal component and a second navigation signal component transmitted by a transmitter; and
processing means for:

determining position measurement information for each of the first navigation signal component and the second navigation signal component; and
performing a consistency check for the first and second navigation signal components, wherein the consistency check is valid if the determined position measurement information for the first and second navigation signal components are consistent with one another, and wherein the consistency check is invalid if the determined position measurement information for the first and second signal navigation components are not consistent with one another.

5. The apparatus of claim 4, wherein the processing means is adapted to determine that the first and second navigation signal components are consistent with one another by validating that the determined position measurement information for the first and second navigation signal components are within a predetermined threshold of each other.

6. The apparatus of claim 4, wherein the processing means is adapted to determine that the first and second navigation signal components are not consistent with one another by validating that the determined position measurement information for the first and second navigation signal components are not within a predetermined threshold of each other.

7. The apparatus of claim 4, wherein the first and second navigation signal components are transmitted by the transmitter at different frequencies, or
in an orthogonal relationship at a same frequency.

8. The apparatus of claim 4 or the method of claim 1, wherein the position measurement information comprises at least one of pseudorange data or pseudo-Doppler data.

9. The apparatus of claim 4 or the method of claim 1, wherein the position measurement information comprises at least one of carrier phase data or range rate data.

10. The apparatus of claim 4 or the method of claim 1, wherein the transmitter is a GPS satellite.

11. The apparatus or method of claim 10, wherein each of the first and second navigation signal components include at least one of the following signals: L1 C/A, L2C, L1C, or L5.

12. The apparatus of claim 4 or the method of claim 1, wherein the transmitter is a GLONASS satellite.

13. The apparatus or method of claim 12, wherein each of the first and second navigation signal components include at least one of the following signals: GLONASS L1 or GLONASS L2.

14. The apparatus of claim 4 or the method of claim 1, wherein the transmitter is a Galileo satellite or a Compass satellite.

15. An article comprising: a storage medium comprising machine-readable instructions stored thereon which, if executed by a computing platform, are adapted to enable the computing platform to carry out the steps of any of claims 1 to 3 or 8 to 14.

FIG. 1

FIG. 2

FREQUENCY
HYPOTHESIS

CODE PHASE HYPOTHESIS

FIG. 3

FIG. 4

ENERGY

CODE PHASE
HYPOTHESIS

FREQUENCY
HYPOTHESIS

FIG. 5

FIG. 6

700

```
RECEIVE FIRST AND SECOND
NAVIGATION SIGNAL COMPONENTS
FROM TRANSMITTER
```

705

```
CLASSIFY ENERGY DETECTION IN FIRST
NAVIGATION SIGNAL COMPONENT
BASED AT LEAST IN PART ON SECOND
NAVIGATION SIGNAL COMPONENT
```

FIG. 7

EP 2 584 376 A1

```
                          ┌─────────────┬──────────────┐
                          │      802    │         818  │
                          │             │  CORRELATOR  │
   816                    │             │              │
   ┌──────────────┐       │     CPU     ├──────────────┤
   │     USER     │       │             │         820  │
   │  INTERFACE   │◄─────►│             │   CHANNEL    │
   │              │       ├─────────────┤   DECODER    │
   └──────────────┘       │             ├──────────────┤
                          │             │         808  │
                          │   MEMORY    │     BB       │
                          │             │  PROCESSOR   │
                          └─────────────┴──────────────┘
                                   804
```

810

806
Tx/Rx

814

812
SPS
Rx

FIG. 8

| | Europäisches Patentamt European Patent Office Office européen des brevets | EUROPEAN SEARCH REPORT | Application Number EP 13 00 0290 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/038601 A1 (DENTINGER MICHAEL P [US] ET AL DENTINGER MICHAEL [US] ET AL) 17 February 2005 (2005-02-17) * paragraph [0066] - paragraph [0071]; figure 5 * | 1-15 | INV. G01S19/32 G01S19/21 |
| X | US 6 377 892 B1 (JOHNSON CRIS W [US] ET AL) 23 April 2002 (2002-04-23) * column 4, line 56 - column 6, line 36; figures 1,2 * | 1-14 | |
| A | US 2004/196183 A1 (ROH MARK C [US]) 7 October 2004 (2004-10-07) * paragraph [0110] - paragraph [0157]; figure 9 * | 1-15 | |
| A | US 2005/285781 A1 (PARK CHAN-WOO [KR] ET AL) 29 December 2005 (2005-12-29) * paragraphs [0050] - [0053]; figure 5 * | 1-15 | |
| | | | TECHNICAL FIELDS SEARCHED (IPC) G01S |

The present search report has been drawn up for all claims

| Place of search | Date of completion of the search | Examiner |
|---|---|---|
| Munich | 27 February 2013 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 00 0290

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2013

| Patent document cited in search report | | Publication date | Patent family member(s) | | | Publication date |
|---|---|---|---|---|---|---|
| US 2005038601 | A1 | 17-02-2005 | AT | 382871 | T | 15-01-2008 |
| | | | AT | 519128 | T | 15-08-2011 |
| | | | DE | 602004011074 | T2 | 02-01-2009 |
| | | | EP | 1654557 | A2 | 10-05-2006 |
| | | | EP | 1757952 | A1 | 28-02-2007 |
| | | | US | 2005038601 | A1 | 17-02-2005 |
| | | | US | 2007106472 | A1 | 10-05-2007 |
| | | | WO | 2005076034 | A2 | 18-08-2005 |
| US 6377892 | B1 | 23-04-2002 | NONE | | | |
| US 2004196183 | A1 | 07-10-2004 | AU | 2003273220 | A1 | 23-01-2004 |
| | | | CN | 1678918 | A | 05-10-2005 |
| | | | MX | PA05000474 | A | 19-04-2005 |
| | | | US | 2004196183 | A1 | 07-10-2004 |
| | | | WO | 2004005954 | A2 | 15-01-2004 |
| US 2005285781 | A1 | 29-12-2005 | KR | 20060000783 | A | 06-01-2006 |
| | | | US | 2005285781 | A1 | 29-12-2005 |

EPO FORM P0459

For more details about this annex : see Official Journal of the European Patent Office, No. 12/82